# EUROPEAN PATENT SPECIFICATION

(11) **EP 2 938 755 B1**
(45) Date of publication and mention of the grant of the patent: **01.02.2017**
(21) Application number: 13824394.4
(22) Date of filing: 16.12.2013
(51) Int. Cl.: C23G 1/19, C25F 1/06, C09D 1/04, C23C 18/12, C23C 22/62

(54) **SURFACE TREATMENT PROCESS OF STAINLESS STEEL**
VERFAHREN ZUR OBERFLÄCHENBEHANDLUNG VON ROSTFREIEM STAHL
PROCÉDÉ DE TRAITEMENT DE SURFACE DE L'ACIER INOXYDABLE

(30) Priority: 28.12.2012 IT MI20122261
(43) Date of publication of application: 04.11.2015
(73) Proprietor: Indesit Company S.p.A., 60044 Fabriano (AN) (IT)
(72) Inventor: Iegiani, Alessandro, I-62021 Apiro (AN) (IT); Petrucci, Valter, I-60044 Fabriano (AN) (IT); Marsili, Andrea, I-60044 Fabriano (AN) (IT)
(74) Representative: Guerci, Alessandro
(86) International application number: PCT/IB2013/060977
(87) International publication number: WO 2014/102656

(56) References cited:
- EP-A1- 0 368 101
- WO-A1-99/02463
- DE-A1-102010 011 185

## Description

The present invention relates to a coating process for stainless steel metal surfaces. Such surfaces are preferably surfaces of components for kitchens, household electrical appliances or kitchen utensils made of stainless steel. The invention also relates to a coated stainless steel metal surface, which can be obtained with the coating process of the invention. Stainless steel components are widely used in the kitchen furnishing sector, for example cooker hobs, work tops, cooker hoods and sinks, as well as in the household electrical appliance sector, for example, for the aesthetic coating thereof, and also in the kitchen utensils sector, which are almost always made of stainless steel. The stainless steel used for the aforementioned components is normally an iron-carbon alloy with the addition of some metal elements, the main ones being chromium, nickel or molybdenum, in variable percentages. According to the presence of chromium, nickel and/or molybdenum and the relative quantities, stainless steels can be obtained with different mechanical resistance, corrosion resistance and workability characteristics can be obtained.

In the use for the preparation of kitchen components, such as cooker hobs, work tops or cooker hoods, stainless steel, despite being an excellent material, has some maintenance problems over time in terms of its original aesthetic appearance.

Cooker hobs, work tops and cooker hoods are in contact, in a consistent and almost constant way, with substances such as detergents for cleaning, foods of various kinds and compositions, cooking fumes, etc., and are subjected to sudden temperature changes from hot to cold and risk being hit by kitchen utensils.

Due to these factors the steel undergoes a progressive deterioration of its appearance which over time shows the marks of scratches and impacts, as well as clear stains and discolouration of the surface which are difficult to eliminate also using specific detergents for steel. Furthermore, steel is a difficult material to clean: suitable detergents must be used with which, in most cases, a uniform aspect of the metal surface cannot be obtained after cleaning.

Document WO99/02463 discloses a coating for stainless steel articles for use in kitchens, with non-stick properties towards oil-based organic materials and water-oil emulsions, and with better scratch/abrasion resistance and temperature resistance than conventional PTFE or silicone coatings.

In light of the above drawbacks connected with the use of kitchen components, household electrical appliances or kitchen utensils made of stainless steel, the object of the present invention is to provide a stainless steel surface, preferably a surface of kitchen components (e.g. cooker hobs, work tops and cooker hoods), household electrical appliances or kitchen utensils, that is scratch-proof, easy to clean and resistant to stains and discolouring.

Another object of the invention is to provide a coating process of a stainless steel surface (or generally stainless steel), preferably a surface of kitchen components (e.g. cooker hobs, work tops and cooker hoods), household electrical appliances or kitchen utensils, which makes such surface scratch-proof, easy to clean and resistant to stains and discolouring.

The invention relates to a coating process for a stainless steel surface (or, in general, stainless steel), preferably a surface of kitchen components, household electrical appliances or kitchen utensils made of stainless steel, comprising the steps of:
a) Preparing the surface through at least one treatment with a basic solution comprising a hydroxide of an alkaline metal and at least one treatment with an acidic solution comprising a strong acid;
b) Applying to the prepared surface a first coating comprising a silicate of an alkaline or alkaline-earth metal and a methyloxirane polymer;
c) Heating the coated surface to a temperature comprised from 200 °C to 350 °C;
d) Cooling the surface to a temperature of less than or equal to 30 °C;
e) Applying a second coating comprising an isopropyl alcohol solution of silicon dioxide, trimethoxymethylsilane and an emulsifier;
f) Heating the coated surface to a temperature comprised from 200 °C to 350 °C.

In a preferred embodiment the stainless steel of the surface is an iron-carbon alloy, potentially comprising other metal elements such as chromium, nickel and molybdenum, in variable quantities according to the characteristics of the steel to be obtained. The stainless steels preferably used to manufacture the kitchen components, household electrical appliances or kitchen utensils are ferritic and austenitic.

The stainless steel surface is preferably a surface of a kitchen component (e.g. a cooker hob, a work top, a sink and a cooker hood), a household electrical appliance or a kitchen utensil. Even more preferably it is the surface of a cooker hob or a kitchen work top.

In a preferred embodiment, the stainless steel surface subjected to the coating process of the invention is the surface of a kitchen component, a household electrical appliance or a kitchen utensil pre-formed before being subjected to the treatment.

In a preferred embodiment of the coating process, the at least one treatment with a basic solution comprising an alkaline metal hydroxide and the at least one treatment with an acidic solution comprising a strong acid are performed through the immersion of the stainless steel surface in the corresponding basic and acidic solutions.

In a preferred embodiment of the process, step a) comprises a first treatment of the stainless steel surface with a basic solution of an alkaline metal hydroxide (first basic treatment) and a second treatment of the stainless steel surface with a basic solution comprising an alkaline metal hydroxide and a degreasing agent/detergent (second basic treatment). The first basic treatment is preferably performed through the immersion of the surface in a basic solution of an alkaline metal hydroxide, preferably an aqueous solution of sodium hydroxide or potassium hydroxide.

The basic solution comprises the hydroxide of an alkaline metal in a concentration between 4% and 10%, preferably between 5% and 7% by weight.

The first basic treatment is preferably performed at a temperature comprised between 45°C and 60°C, more preferably between 50°C and 55°C. The treatment time may vary from 1 to 5 minutes, preferably between 2 and 4 minutes.

The second basic treatment is preferably performed through the immersion of the surface in a basic solution comprising an alkaline metal hydroxide, preferably a sodium or potassium hydroxide solution, and a degreasing agent/detergent, preferably EDTA (Ethylenediaminetetraacetic acid).

The basic solution of the second treatment comprises an alkaline metal hydroxide and a degreasing agent/detergent in a total concentration between 4% and 10%, preferably between 5% and 7% by weight.

The second basic treatment is preferably performed at a temperature comprised between 45°C and 60°C, more preferably between 40°C and 50°C. The treatment time may vary from 1 to 3 minutes, preferably between 1.5 and 2 minutes.

Preferably between the first and the second basic treatment there is a washing step of the surface with a mixture of surfactants and/or emulsifiers. This mixture preferably comprises butyl diglycol and polyethoxylated alcohol. The concentration of such a mixture in water is comprised between 0.4% and 1%, preferably between 0.5 and 0.7% by weight.

The washing step is performed by immersing the surface in the mixture of surfactants and/or emulsifiers.

The washing temperature is preferably comprised between 45°C and 60°C, more preferably between 50°C and 55°C. The washing time may vary from 1 to 5 minutes, preferably between 2 and 4 minutes.

The aim of at the at least one treatment with a basic solution, preferably of the first and the second basic treatment is to degrease and clean the surface to make it suitable for the subsequent acidic treatment.

Preferably after the at least one basic treatment, the surface is subjected to rinsing in water, preferably performed through immersion of the surface in water.

The surface is then subjected to the at least one treatment with an acidic solution comprising a strong acid (acidic treatment). A strong acid means a substance with an acid dissociation constant (Ka) >1. The strong acid is preferably chosen from: sulphuric acid, hydrochloric acid and hydrofluoric acid. Preferably the acidic solution comprises a mixture of strong acids, more preferably it is a mixture of sulphuric acid and hydrofluoric acid.

The at least one acidic treatment is preferably performed through the immersion of the surface in the acidic aqueous solution comprising a strong acid.

The concentration of the acidic solution is comprised between 1% and 5%, preferably between 2% and 3% by weight.

The at least one acidic treatment is performed for a time comprised between 1 minute and 5 minutes, preferably between 2 and 4 minutes.

The acidic treatment advantageously comprises a first electrolytic cathode activation step through the treatment of the stainless steel surface with an aqueous solution of a strong acid and/or a second electrolytic anode activation step through the treatment of the surface with an aqueous solution of a strong acid.

The strong acid, in both the anode and cathode treatments, is chosen from: sulphuric acid, hydrochloric acid and hydrofluoric acid. Preferably the acidic solution comprises a mixture of strong acids, more preferably it is a mixture of sulphuric acid and hydrofluoric acid.

Both the cathode activation and the anode activation are preferably performed through the immersion of the surface in the acidic aqueous solution comprising a strong acid.

The concentration of the acidic solution, in both activations, is comprised between 1% and 5%, preferably between 2% and 3%.

Both the activations are performed for a time comprised between 1 minute and 5 minutes, preferably between 2 and 4 minutes. The temperature of its activations is preferably ambient temperature (20-25°C).

After the at least one treatment with an acidic aqueous solution, the surface is subjected to neutralisation with a basic solution of a hydroxide comprising an alkaline metal hydroxide, preferably sodium hydroxide and potassium hydroxide.

The basic solution has a concentration comprised between 1% and 5% preferably between 2% and 3% by weight. The neutralisation temperature is preferably ambient temperature (20-25°C). The neutralisation time is approximately 1-3 minutes. The neutralisation is preferably performed through the immersion of the surface in the basic solution.

Between the at least one treatment with an acidic aqueous solution and the neutralisation, a rinse step of the surface through immersion in water is advantageously provided.

After the neutralisation step, there may be one or more rinsing steps of the surface in water. Such one or two rinses may be performed through the immersion of the surface in water at room temperature and/or through spray washing the surface with water.

The surface is therefore preferably dried with, for example, hot air at a temperature comprised between 100°C and 130°C and then left to cool or cooled down, for example, with cold air.

Then step b) of the process, in which a first coating comprising a silicate of an alkaline metal or an alkaline-earth metal and a methyloxirane polymer is applied to the surface thus prepared, is performed.

The silicate is comprised in the mixture in a quantity that ranges from 5 to 20%, preferably from 8 to 15%. The methyloxirane polymer is comprised in the mixture in the quantity of 3% to 10%, preferably between 5% and 8% by weight.

The silicate of an alkaline or alkaline-earth metal is preferably potassium silicate.

The application temperature of the first coating is ambient temperature.

The thickness of the first coating is comprised between 1 and 5 micron, preferably between 2 and 4 micron.

Following the application of the first coating, the coated surface is heated to a temperature comprised between 200°C and 350°C. The heating time is preferably comprised between 3 and 10 minutes, more preferably between 5 and 10 minutes.

The surface is then cooled to a temperature of less than or equal to 30°C, preferably with cold air.

Then a second coating is applied comprising an isopropyl alcohol solution of silicon dioxide, trimethoxymethylsilane and an emulsifier.

The emulsifier is preferably 2,4,7,9-tetramethyl-5-decyne-4,7-diethoxylate. The mixture used to prepare the second coating is obtained by adding the trimethoxymethylsilane dissolved/suspended in isopropyl alcohol to the silicon dioxide, shaking the mixture obtained. After an amount of time comprised between 80 and 160 minutes, preferably between 100 and 140 minutes, the emulsifier dissolved/suspended in isopropyl alcohol is added to the mixture thus obtained, shaking constantly.

In the mixture described above, the silicon dioxide is comprised in the quantity of 30 to 40% by weight. The trimethoxymethylsilane is comprised in the mixture in the quantity of 10 to 18% by weight. The emulsifier is included in the mixture in the quantity of 40% to 60% by weight.

The thickness of the second coating is comprised between 2 and 8 micron, preferably between 3 and 5 micron.

The coated surface is then heated to a temperature comprised between 200 °C and 350 °C. The heating time ranges from 10 to 40 minutes, preferably from 15 to 30 minutes.

In another aspect, the invention relates to a coated stainless steel surface, which can be obtained with the coating process of the invention. In other words, the invention relates to stainless steel coated with the coating which can be obtained through the process of the invention.

Stainless steel is an iron-carbon alloy, potentially comprising other metal elements such as chromium, nickel and molybdenum, in variable quantities according to the characteristics of the steel to be obtained.

The stainless steel surface is preferably a surface of a kitchen component (e.g. a cooker hob, a work top, a sink and a cooker hood), a household electrical appliance or a kitchen utensil. Even more preferably it is the surface of a cooker hob or a kitchen work top.

The invention therefore relates to a kitchen component, preferably a cooker hob, a work top and a cooker hood made of stainless steel coated with the coating method of the invention. This coating allows a coated cooker hob, work top or cooker hood made of stainless steel to be obtained which is resistant to scratches, stains, discolouring and is easy to clean. In particular, the cleaning can be performed using water and a cloth without needing to add detergents.

**Embodiment of the process**

| **Step** | **Product** | **Chemical characteristics** | **Conc. (%)** | **Temp (°C)** | **Time (minutes)** |
|---|---|---|---|---|---|
| **Immersion** | **Sodium hydroxide** | **Alkaline** | **5,0-7,0** | **50-55** | **3** |
| **Immersion** | **Butyl diglycol + polyethoxylated alcohol** | **Mixture of surfactants and emulsifiers** | **0,5-0,7** | **50-55** | **3** |
| **Immersion** | **Potassium hydroxide + EDTA** | **Alkaline degreaser** | **5,0-7,0** | **40-50** | **1,5** |
| **Rinse (immersion)** | | **H₂0** | | **Amb**. | **1** |
| **Rinse (immersion)** | | **H₂0** | | **Amb**. | **1** |
| **Electrolytic cathode activation immersion** | **Sulphuric acid + hydrofluoric acid** | **Acid** | **2,0-3,0** | **Amb**. | **3** |
| **Electrolytic anode activation immersion** | **Sulphuric acid + hydrofluoric acid** | **Acid** | **2,0-3,0** | **Amb**. | **3** |
| **Rinse immersion** | | **H₂0** | | **Amb**. | **1** |
| **Rinse immersion** | | **H₂0** | | **Amb**. | **1** |
| **Immersion neutralisation** | **Sodium hydroxide** | **Alkaline** | **2,0-3,0** | **Amb**. | **1** |
| **Rinse immersion** | | **H₂0** | | **Amb.** | **1** |
| **Rinse immersion** | | | | **Amb.** | **1** |
| **Spray rinse** | | | | **Amb.** | **1** |
| **Drying** | | **Hot air** | | **100°-130°** | **10 minutes** |
| **Cooling** | | **Cold air** | | **Amb.** | **Up to max 30°C** |
| **First coating application step** | **Potassium silicate + Methyloxirane polymer** | **Coating** | | | |
| **First firing** | | **Hot air** | | **250°** | **5** |
| **Cooling** | | **Cold air** | | **30°** | |
| **Second coating application step** | **Silicon dioxide trimethoxymethylsila ne 2,4,7,9-tetramethyl-5-decyne-4,7-diol ethoxylate in isopropyl alcohol** | | | | |
| **Second firing** | | **Hot air** | | **250°** | **20** |

A stainless steel surface coating with the above process was subjected to a scratch resistance test using the protocol of standard SO 15184:2012 "Paints and varnishes - Determination of film hardness by pencil test". This test had a positive outcome.

The surface was also subjected to a resistance test at high temperatures by applying a temperature of 560°C for three minutes. The results show that uncoated steel has evidence of yellow stains from the flame, whereas on coated steel no marks left by the high temperature can be seen.

The coated steel also proved to be hydrophobic, easy to clean, resistant to discolouring and stain resistant.

## Claims

1. A coating process for a stainless steel surface, comprising the steps of:
a) Preparing the surface by at least one treatment with a basic solution comprising an alkaline metal hydroxide and at least one treatment with an acidic solution comprising a strong acid;
b) Applying to the prepared surface a first coating comprising a silicate of an alkaline or alkaline-earth metal and a methyloxirane polymer;
c) Heating the coated surface to a temperature comprised from 200 °C to 350 °C;
d) Cooling the surface to a temperature of less than or equal to 30 °C;
e) Applying a second coating comprising an isopropyl alcohol solution of silicon dioxide, trimethoxymethylsilane and an emulsifier;
f) Heating the coated surface to a temperature comprised from 200 °C to 350 °C.

2. Process according to claim 1, wherein said surface is a surface of kitchen components, household electrical appliances or kitchen utensils made of stainless steel.

3. Process according to claim 1 or 2, wherein said kitchen component is a cooker hob, a work top, a sink or a cooker hood.

4. Process according to any one of claims 1 to 3, wherein said step a) comprises a first treatment of the stainless steel surface with a basic solution of an alkaline metal hydroxide and a second treatment of the stainless steel surface with a basic solution comprising a hydroxide of an alkaline metal and a degreasing agent/detergent.

5. Process according to any one of claims 1 to 4, wherein said acidic treatment comprises a first cathode electrolytic activation step by treatment of the stainless steel surface with an aqueous solution of a strong acid and/or a second anode electrolytic activation step by treatment of the surface with an aqueous solution of a strong acid.

6. Process according to any one of claims 1 to 5, wherein said strong acid is chosen from: sulphuric acid, hydrochloric acid and hydrofluoric acid, preferably a mixture of sulphuric acid and hydrofluoric acid.

7. Process according to any one of claims 1 to 6, wherein said silicate of an alkaline or alkaline-earth metal is potassium silicate.

8. Process according to any one of claims 1 to 7, wherein said silicate is used in an amount comprised between 5 and 20%, preferably from 8 to 15% by weight, and said methyloxirane polymer is used in an amount of 3% to 10%, preferably between 5% and 8% by weight.

9. Process according to any one of claims 1 to 8 wherein said first coating has a thickness comprised between 1 and 5 micron, preferably between 2 and 4 micron.

10. Process according to any one of claims 1 to 9 wherein said second coating has a thickness comprised between 2 and 8 micron, preferably between 3 and 5 micron.

11. Coated stainless steel obtainable with the coating process according to any of claims 1 to 10.

12. A kitchen component, household electrical appliance or kitchen utensil made of stainless steel according to any of claims 1 to 10.

13. A kitchen component according to claim 12, wherein said component is a cooker hob, a work top, a sink or a cooker hood.

## Patentansprüche

1. Beschichtungsprozess für eine rostfreie Stahloberfläche, der die folgenden Schritte umfasst:
- a) Vorbereiten der Oberfläche durch mindestens eine Behandlung mit einer basischen Lösung, die ein alkalisches Metallhydroxid umfasst und mindestens mit einer sauren Lösung, die eine starke Säure umfasst;
- b) Auftragen auf die vorbereitete Oberfläche einer ersten Beschichtung, die ein Silikat eines alkalischen oder erdalkalischen Metalls und eines Methyloxiranpolymers umfasst;
- c) Erhitzen der beschichteten Oberfläche auf eine Temperatur von 200 °C bis 350 °C;
- d) Kühlen der Oberfläche auf eine Temperatur von weniger oder gleich 30 °C;
- e) Auftragen einer zweiten Beschichtung, die eine Silikondioxid-Isopropylalkohollösung, Trimethoxymethylsilan und einen Emulgator umfasst;
- f) Erhitzen der beschichteten Oberfläche auf eine Temperatur zwischen 200 °C und 350 °C.

2. Prozess nach Anspruch 1, wobei die Oberfläche eine Oberfläche von Küchenbauteilen, elektrischen Haushaltsgeräten oder Küchenutensilien aus rostfreiem Stahl ist.

3. Prozess nach Anspruch 1 oder 2, wobei das Küchenbauteil ein Kochfeld, eine Arbeitsfläche, eine Spüle oder eine Abzugshaube ist.

4. Prozess nach einem der Ansprüche 1 bis 3, wobei Schritt a) eine erste Behandlung der rostfreien Stahloberfläche mit einer basischen Lösung eines alkalischen Metallhydroxids ist, und eine zweite Behandlung der rostfreien Stahloberfläche mit einer basischen Lösung, die ein Hydroxid eines alkalischen Metalls und ein Entfettungsmittel/Waschmittel umfasst.

5. Prozess nach einem der Ansprüche 1 bis 4, wobei die saure Behandlung einen ersten Aktivierungsschritt einer elektrolytischen Kathode durch Behandlung der rostfreien Stahloberfläche mit einer wässerigen Lösung einer starken Säure umfasst, und/oder einen zweiten Aktivierungsschritt einer elektrolytischen Anode durch Behandlung der Oberfläche mit einer wässrigen Lösung einer starken Säure umfasst.

6. Prozess nach einem der Ansprüche 1 bis 5, wobei die starke Säure ausgewählt wird aus: Schwefelsäure, Salzsäure und Flusssäure, bevorzugt ein Gemisch aus Schwefelsäure und Flusssäure.

7. Prozess nach einem der Ansprüche 1 bis 6, wobei das Silikat eines alkalischen oder erdalkalischen Metalls Kaliumsilikat ist.

8. Prozess nach einem der Ansprüche 1 bis 7, wobei das Silikat in einer Menge zwischen 5 und 20 Gew.-%, bevorzugt 8 bis 15 Gew.-% verwendet wird, und das Methyloxiranpolymer in einer Menge von 3 bis 10 Gew.-%, bevorzugt zwischen 5 und 8 Gew.-% verwendet wird.

9. Prozess nach einem der Ansprüche 1 bis 8, wobei die erste Schicht eine Stärke zwischen 1 und 5 Mikrometer, bevorzugt zwischen 2 und 4 Mikrometer hat.

10. Prozess nach einem der Ansprüche 1 bis 9, wobei die zweite Beschichtung eine Stärke zwischen 2 und 8 Mikrometer, bevorzugt zwischen 3 und 5 Mikrometer hat.

11. Beschichteter rostfreier Stahl, der durch den Beschichtungsprozess nach einem der Ansprüche 1 bis 10 erhalten wird.

12. Küchenbauteil, Haushaltelektrogerät oder Küchenutensil, das aus einem rostfreien Stahl nach einem der Ansprüche 1 bis 10 hergestellt ist.

13. Küchenbauteil nach Anspruch 12, wobei das Bauteil eine Kochfläche, eine Arbeitsfläche, eine Spüle oder eine Abzugshaube ist.

## Revendications

1. Procédé de revêtement pour une surface d'acier inoxydable comprenant les étapes consistant à :
a) préparer la surface par au moins un traitement avec une solution basique comprenant un hydroxyde de métal alcalin et au moins un traitement avec une solution acide comprenant un acide fort ;
b) appliquer à la surface préparée un premier revêtement comprenant un silicate d'un métal alcalin ou alcalinoterreux et un polymère de méthyloxyrane ;
c) chauffer la surface revêtue à une température comprise dans une plage de 200 °C à 350 °C ;
d) refroidir la surface à une température inférieure ou égale à 30 °C ;
e) appliquer un second revêtement comprenant une solution dans de l'alcool isopropylique de dioxyde de silicium, de triméthoxyméthylsilane et d'un émulsionnant ;
f) chauffer la surface revêtue à une température comprise dans la plage de 200 °C à 350 °C.

2. Procédé selon la revendication 1, dans lequel ladite surface est une surface de composants de cuisine, d'appareils électriques domestiques ou d'ustensiles de cuisine constitués d'acier inoxydable.

3. Procédé selon la revendication 1 ou 2, dans lequel ledit composant de cuisine est une plaque de cuisson, une surface de travail, un évier ou une hotte de cuisinière.

4. Procédé selon l'une quelconque des revendications 1 à 3, dans lequel ladite étape a) comprend un premier traitement de la surface d'acier inoxydable avec une solution basique d'un hydroxyde de métal alcalin et un second traitement de la surface d'acier inoxydable avec une solution basique comprend un hydroxyde d'un métal alcalin et un agent dégraissant/détergent.

5. Procédé selon l'une quelconque des revendications 1 à 4, dans lequel ledit traitement acide comprend une première étape d'activation électrolytique cathodique par traitement de la surface d'acier inoxydable avec une solution aqueuse d'un acide fort et/ou une seconde étape d'activation électrolytique anodique par traitement de la surface avec une solution aqueuse d'un acide fort.

6. Procédé selon l'une quelconque des revendications 1 à 5, dans lequel ledit acide fort est choisi parmi l'acide sulfurique, l'acide chlorhydrique et l'acide fluorhydrique, de préférence un mélange d'acide sulfurique et d'acide fluorhydrique.

7. Procédé selon l'une quelconque des revendications 1 à 6, dans lequel ledit silicate d'un métal alcalin ou alcalinoterreux est le silicate de potassium.

8. Procédé selon l'une quelconque des revendications 1 à 7, dans lequel ledit silicate est utilisé en quantité comprise dans une plage de 5 à 20 %, de préférence de 8 à 15 % en poids, et ledit polymère de méthyloxyrane est utilisé en quantité de 3 à 10 %, de préférence de 5 à 8 % en poids.

9. Procédé selon l'une quelconque des revendications 1 à 8, dans lequel ledit premier revêtement a une épaisseur comprise dans une plage de 1 à 5 micromètres, de préférence de 2 à 4 micromètres.

10. Procédé selon l'une quelconque des revendications 1 à 9, dans lequel ledit second revêtement a une épaisseur comprise dans une plage de 2 à 8 micromètres, de préférence de 3 à 5 micromètres.

11. Acier inoxydable revêtu qui peut être obtenu avec le procédé de revêtement selon l'une quelconque des revendications 1 à 10.

12. Composant de cuisine, appareil électrique domestique ou ustensile de cuisine constitué d'acier inoxydable selon l'une quelconque des revendications 1 à 10.

13. Composant de cuisine selon la revendication 12, dans lequel ledit composant est une plaque de cuisson, une surface de travail, un évier ou une hotte de cuisinière.
